# EUROPEAN PATENT APPLICATION

(11) **EP 0 609 957 A1**
(43) Date of publication of application: **10.08.1994**
(21) Application number: 94200306.2
(22) Date of filing: 04.02.1994
(51) Int. Cl.: G08B 13/24, G07C 9/00, G06K 7/08, H01F 5/00

(54) **A responder for use in a detection or identification system and method of producing a coil for such responder**

(30) Priority: 04.02.1993 NL 9300221
(71) Applicant: N.V. Nederlandsche Apparatenfabriek NEDAP, NL-7141 DE Groenlo (NL)
(72) Inventor: Kip, Harm Jacob, NL-7132 CS Lichtenvoorde (NL)
(74) Representative: Smulders, Theodorus A.H.J., Ir.

(57) **Abstract**

The invention comprises a coil form and a method of producing this coil for use in an identification system, the winding comprising a layer of approximately rectangular section. As a result, the fill factor of the available winding space becomes very high, whilst the winding capacitance remains low.

## Description

The invention relates to a responder for use in a detection or identification system, the responder comprising a coil made up of at least one core and at least one electrically conductive wire wound round the core, the coil being part of a resonant circuit for receiving an interrogation field radiated by the system.

Such responders are described *inter alia* in applicant's Dutch patent no. 176404. Such a system is used for detecting or identifying the responder, more particularly a label, comprising at least one resonant circuit, the system comprising a transmitter unit for generating an electromagnetic interrogation field and a detection unit for detecting resonance effects caused by a label located in the interrogation field.

The energy for such a responder is transferred along a magnetic route, i.e. the responder absorbs energy from the interrogation field. To make a large distance possible between the transmitter and receiver unit on the one hand and the responder on the other, it is important that the cross section of the coil be as large as possible and the number of turns of the coil be as large as possible. Moreover, the coil must have a high resonant rise factor. A disadvantage of such a responder is that, from a practical point of view, its dimensions become too large when the coil is so dimensioned that the responder can operate reliably at the large distance referred to. If the dimensions of the housing of a responder, and hence the dimensions of the coil, are so dimensioned that they have a value suitable for practice, the distance at which the responder can operate reliably is limited and mostly less than desired. This necessitates a compromise.

The responder according to the invention meets this objection and is characterized in that a cross section of the wire has an at least substantially rectangular shape, that long sides of adjacent turns of the wire are at least substantially in abutment and that at least a part of the surface of a short side is curved so as to obtain a turn.

This provides the advantage that the fill factor of the available winding space in a responder is very high. Moreover, the capacitance between turns remains low. The alternating voltage between adjacent turns is also low, so that the current through the winding capacitances and hence the losses are small.

British patent specification 715,226 discloses a coil which is wound from wire of rectangular cross section. However, a turn of the wire is wound onto a subjacent turn of the wire, so that the coil has the shape of a spiral. In general, therefore, a turn is not wound round a core, with the exception of the innermost turn. The surface of a long side is curved so as to obtain a turn. Accordingly, this coil is of an entirely different type than the coil according to the present invention.

According to a particular embodiment of the coil according to the invention, the wire is wound in the shape of a helix. Preferably, the core is bar-shaped, with the wire being wound round the core in a helical layer of turns, extending in the longitudinal direction of the core.

The invention also relates to a method of producing a coil for a responder such as described hereinabove. According to one possible embodiment of the method, a wire of round cross section is flattened so as to obtain a wire of at least substantially rectangular cross section and the flattened wire is wound round a core, in such a manner that long sides of adjacent turns of the wire are at least substantially in abutment and that parts of the surface of short sides of the wire are curved by the winding operation.

According to an alternative method, a tube is turned off, whereby a shaving is produced which forms a wire having at least substantially the shape of a helix, a cross section of the shaving having an at least substantially rectangular shape, the helix formed is provided with an insulating sheath and a core is slid into the helix formed.

An advantageous method is characterized by the following steps: a round wire is wound round a core so that the wound wire forms a coil wound around the core; and at least two extreme turns of the coil formed are pressed towards each other so that adjacent turns of the coil are pressed together and are flattened in order to obtain a wire wound round the core and having an at least substantially rectangular section.

The invention will be explained in detail with reference to the drawing. In the drawing:
Fig. 1 shows a longitudinal section of a part of a coil which is known per se;
Fig. 2 shows a side elevation of the coil of Fig. 1;
Fig. 3 shows a longitudinal section of a part of a coil which is known per se;
Fig. 4 shows a side elevation of the coil of Fig. 3;
Fig. 5 shows a longitudinal section of a part of a coil which is known per se;
Fig. 6 shows a side elevation of the coil of Fig. 5;
Fig. 7 shows a longitudinal section of a part of a coil according to the invention;
Fig. 8 shows a side elevation of the coil of Fig. 7;
Fig. 9 diagrammatically shows a method of producing a coil according to Fig. 7; and
Fig. 10 shows a longitudinal section of a part of an alternative embodiment of a coil according to the invention;

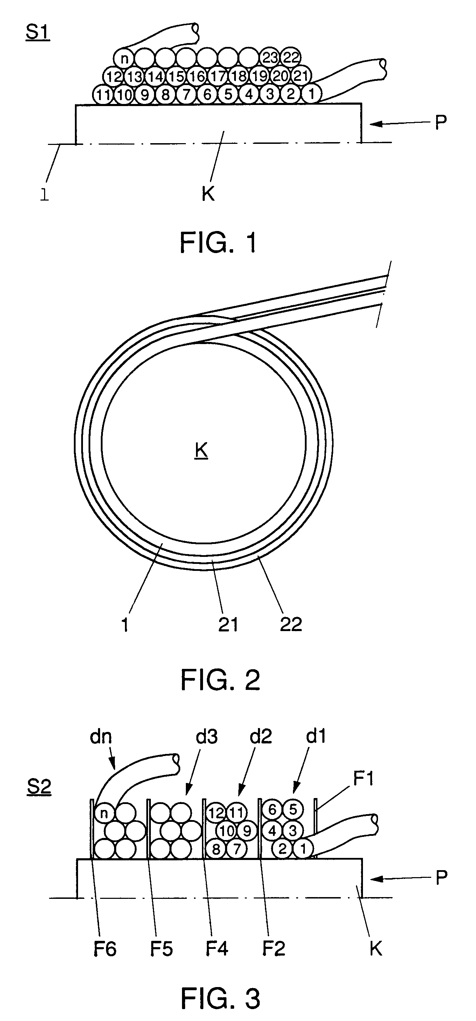

If many turns are to be accommodated in a limited space, it is requisite that thin winding wire be used and that a winding technique be used whereby little air is included. A conventional method for this purpose is winding a round wire according to the so-called orthocyclic principle. The wire may for instance be made of copper and is provided with an insulating sheath at its outer surface. Consecutive layers of the round winding wire are fitted into each other as much as possible, as is shown in Fig. 1.

Fig. 1 shows a longitudinal section of such a prior art coil S1 with turns 1-n wound round a round core K. The core K may for instance consist of ferrite material. Because the coil S1 is rotation-symmetrical relative to the chain-dotted line 1, only an upper half of the coil is shown.

Fig. 2 shows a side elevation of the coil S1 along the arrow p of Fig. 1. The sequence in which the turns have been wound round the core K is indicated with increasing reference numerals 1-n, turn 1 being applied first and turn n being applied last. This means that first of all a first layer of turns 1-11 has been applied from the right to the left, whereafter a second layer of turns 12-21 has been applied from the left to the right, etc. The coil S1 can be employed in a resonant circuit of a label of an identification system, for instance of the type as discusssed hereinabove. A disadvantage of this coil is that the capacitance produced between the layers of the winding, the so-called winding capacitance, is rather large. Moreover, in use a quite high voltage applies across this winding capacitance, so that losses occur as a result of the alternating current that is going to flow in it. The voltage is rather high because, for instance, turn 1 abuts turn 21. Since the number of turns between turn 1 and turn 21 is large, the high voltage referred to will be present between these two turns. The same applies to other turns 1-11 with repect to, for instance, turns 21-12. On the other hand, the available space is very well packed with winding wire. As a result of a spread over the thickness of the insulating layer forming the insulating sheath, the value of the capacitance between turns is not constant, so that the self-inductance of the coil S1 and hence the resonant frequency of the label in which the coil is employed exhibits a spread. As a result, a resonance curve of the resonant circuit may widen, while the position of a top of a curve may shift. This may even mean that each resonant circuit must be tuned individually.

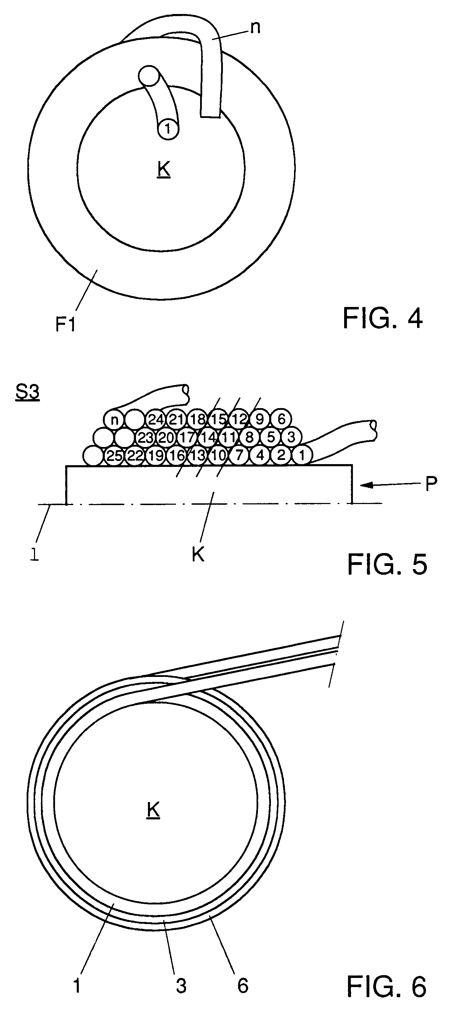

According to another known principle, it is endeavored to keep the winding capacitance referred to low by not winding the wire in neat layers, as discussed with reference to Fig. 1, but, instead, to wind parts of the coil in several chambers side by side. This is shown in the coil S2 according to Figs. 3 and 4, where parts corresponding with Figs. 1 and 2 have been provided with the same reference numerals. Here, the capacitance between the layers is divided into several small portions, in chambers d1, d2, d3, d4, which are no longer connected in parallel but in series, so that the total capacitance decreases. The sequence in which the turns have been wound round the core K has been indicated with increasing reference numerals 1-n, turn 1 having been applied first and turn n last. The chambers d1-d4 are separated by flanges F1-F6. Also, there is only a small alternating voltage across the partial layers, i.e. between the layers of d1, d2, d3 and d4, respectively, so that the currents through the winding capacitances, and hence also the losses, are small. Owing to the intermediate flanges F1-F6, this is a cumbersome construction for producing coils on industrial scale.

An approximation of the advantages of the coil S2 according to Figs. 3 and 4 is obtained by employing so-called "semi bank" winding. The individual chambers (d1-d4 of Fig. 2) have been omitted here and the coil is built up from the side in several layers. Figs. 5 and 6 show a coil S3 which has been produced according to this winding method, parts corresponding with Figs. 1 and 2 having been provided with the same reference numerals. The sequence in which the turns have been wound round the core K has been indicated with increasing reference numerals 1-n, turn 1 having been applied first and turn n last. In addition to the poor copper factor, another drawback associated with this method is that the winding height is difficult to control accurately, so that the nominal winding height must be considerably lower than the maximum available height, so as to be able to produce coils with a high yield, i.e. in such a manner that relatively few coils are rejected.

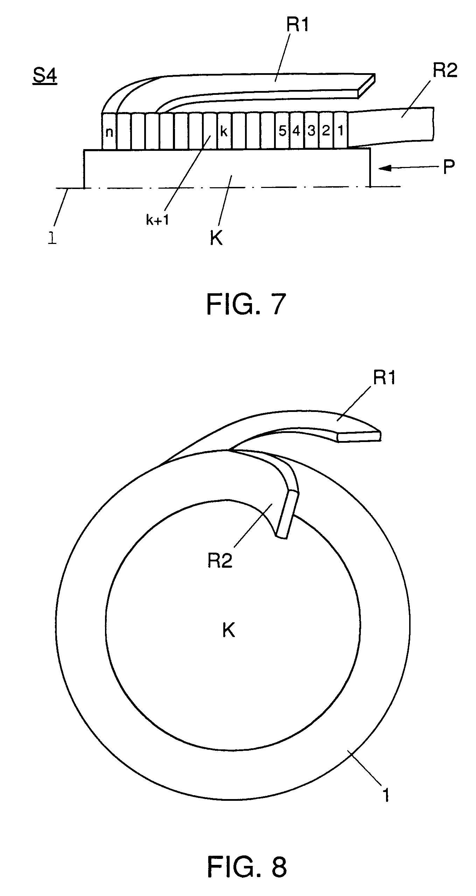

Figs. 7 and 8 show a possible embodiment of a coil S4 according to the invention, wherein the above-mentioned disadvantages have been removed. Parts corresponding with Figs. 1 and 2 have been provided with the same reference characters. The coil S4 comprises a bar-shaped core K with a round cross section in this example. A core K may for instance be made from ferrite. A single layer of wire W has been wound round the core K. The manner in which the turns have been provided round the core K has been indicated with increasing reference numberals 1-n. This means that turn 1 merges directly with turn 2, turn k with turn k+1 and turn n-1 with turn n, where 1<k<n-1. The wire W consists of an electrically conductive material, such as for instance copper. On the outer surface, the wire is provided with an insulating sheath, which, however, is not shown in Figs. 7 and 8. The wire W has an at least substantially rectangular section. The wire is wound onto the core in such a manner that the long sides of the rectangular wire section are in abutment. The short side of the retangle has been made so small that the number of turns necessary for the coil fits into a single layer. The fill factor of the available winding space is then very high, while the winding capacity remains low. Moreover, no large alternating voltage will develop between adjacent turns k and k+1 because turn k merges directly with turn k+1 (1<k<n-1). Accordingly, the voltage difference between adjacent turns is small. As a result, the current between the winding capacitances, and hence the losses, remain small. The height of the approximately rectangular wire section has been chosen such that the surface of the winding wire is large enough to keep the ohmic resistance of the coil low. The wire , as it were, sits on its narrow side. Because of the use of a flat wire, the return terminal portion R1 which is necessary to bring the beginning and the end of the winding together and connect them to an identification chip is naturally very thin as well, so that it hardly increases the necessary height of the winding. The coil S4 accordingly comprises two coil terminal portions, R1 and R2, which likewise have an at least substantially rectangular section. As a result the necessary height of the coil S4 is very slight.

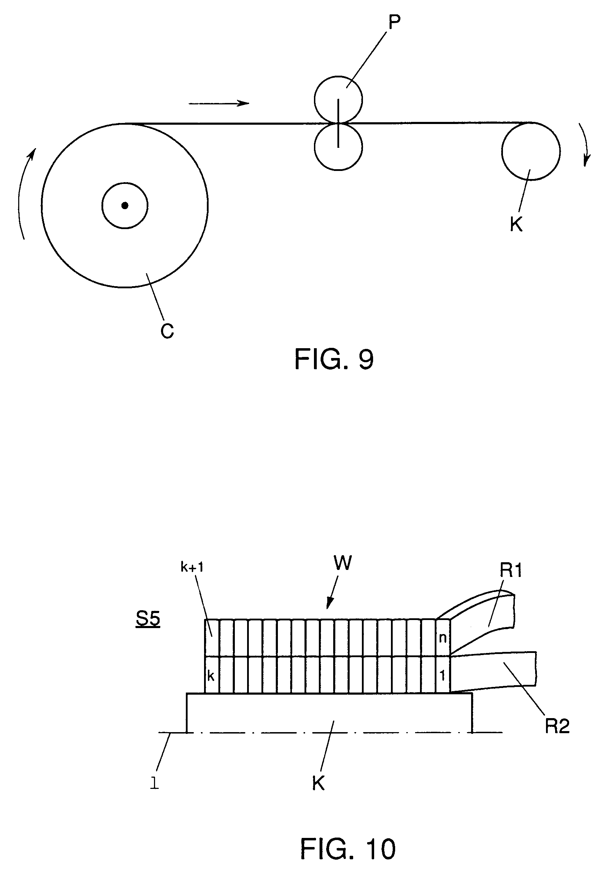

A wire with the proper cross-sectional shape can be simply purchased, but setting such a wire on its side is not simple. The coil S4 is preferably produced by starting from a standard round wire which is subsequently flattened during the winding process to obtain the proper dimensions. Such a process is shown diagrammatically in Fig. 9. The round wire is unwound from a bobbin C and fed to a roller P to be flattened to the desired dimensions. The roller P is preferably arranged close to the core K of the coil, so that the wire can be wound onto the core K directly after being flattened. The direction of transport of the wire W is indicated by arrows in Fig. 9.

When metal is being worked on a lathe, shavings are produced in the form of curls. This principle can be used as a first alternative method for obtaining the coil S4 according to Figs. 7 and 8. The starting material is a tube, preferably made of copper or a copper alloy, having suitable dimensions and material properties. As this tube is being turned off, a shaving is produced having approximately the shape of the coil of Figs. 7 and 8. After the coil has been lacquered with an insulating lacquer and optionally compressed to obtain the proper dimensions, the ferrite core K can be slid into this coil. While doing so, the inner diameter of the coil can be temporarily increased by twisting the coil. After the core K has been slid into the coil, the twist can be removed.

According to a second alternative method of producing the coil S4 according to Figs. 7, 8, a wire, which is for instance round, is wound round the core K. The opposite turns 1 and n are subsequently pressed towards each other, so that the turns 1-n of the wire W are pressed against each other and are flattened. After the flattening operation, a coil according to Figs. 7,8 has been obtained.

It holds for all production methods outlined that the originally round wire W may for instance have a diameter of 50 microns. After flattening, the wire has at least substantially a rectangular section, the ratio of a long side to a short side thereof being, for instance, 10:1.

According to an alternative embodiment of the coil S4, the short sides referred to have a slightly convex surface, as shown in Figs. 7 and 10. This convex surface may for instance be the result of the fact that the wire originally had a round section before being passed through the roller P. After the rolling operation, the long sides of the wire section will be at least substantially flat, while the short sides will have retained the original round shape of the wire to some extent.

According to the invention, it is also possible for the core 1 of the coil to have a cross section deviating from the shape of a circle, such as for instance a square, triangular, rectangular or polygonal (penta, hexa, etc.) section.

The sequence in which the turns 1-n have been provided round the core K during the manufacturing process is not relevant to the coil S4 according to Figs. 7 and 8. For instance, it is of course possible to provide the turn n first and the turn 1 last. It is also conceivable that first the turns k - n are provided and subsequently turns k-1 - 1. The wire W may here be made up of two (or more) wire lengths forming, for instance, the turns k - n and the turns k-1 - 1, respectively, the turns k and k-1 being welded together.

According to an alternative embodiment, a coil S5 comprises turns 1-n made up of two layers, as shown in Fig. 10. The coil S5 can be produced according to the manufacturing methods outlined hereinbefore. It holds for all coils according to the invention that the wire W can for instance be made from copper, a copper alloy or from another electrically conductive material.

The finished coil S4/S5 can finally be mounted in a responder in known manner.

## Claims

1. A responder for use in a detection or identification system, the responder comprising a coil made up of at least one core and at least one electrically conductive wire wound round the core, the coil being part of a resonant circuit for receiving an interrogation field radiated by the system,
characterized in that a cross section of the wire has an at least substantially rectangular shape, that long sides of adjacent turns of the wire are at least substantially in abutment and that at least a part of the surface of a short side is curved in order to obtain a turn.

2. A responder according to claim 1, characterized in that the wire is wound round the core in the form of a helix.

3. A responder according to claim 2, characterized in that the core is bar-shaped and that the wire is wound round the core in a helical layer of turns, extending in the longitudinal direction of the core.

4. A responder according to claim 2 or 3, characterized in that the coil comprises a layer of turns which are wound in accordance with the orthocyclic principle.

5. A responder according to any one of the preceding claims 2-4, characterized in that the coil comprises a second layer of turns which is provided round the layer of turns wound round the core.

6. A responder according to any one of the preceding claims 2-4, characterized in that the coil comprises one layer of turns.

7. A responder according to any one of the preceding claims 2-6, characterized in that the core has a round cross section.

8. A responder according to any one of the preceding claims, characterized in that the wire is provided with an electrically insulating sheath.

9. A responder according to any one of the preceding claims, characterized in that the coil comprises coil terminal portions having an at least substantially rectangular section.

10. A method of producing a coil according to any one of the preceding claims, characterized in that a wire having a round cross section is flattened in order to obtain a wire having an at least substantially rectangular cross section and that the flattened wire is wound round a core, in such a manner that long sides of adjacent turns of the wire end up at least substantially in abutment and that parts of the surface of short sides of the wire are curved by the winding process.

11. A method of producing a coil for a responder according to any one of the preceding claims 1-9, characterized in that the method comprises the following steps:
- a tube is turned off, whereby a shaving is produced forming a wire having at least substantially the shape of a helix, and a cross section of the shaving having an at least substantially rectangular shape;
- the helix formed is provided with an insulating sheath; and
- a core is slid into the helix.

12. A method according to claim 11, characterized in that the shaving is lacquered for providing an insulating sheath.

13. A method according to claim 11 or 12, characterized in that the helix is compressed, so that the length of the helix decreases and adjacent long sides of the shaving end up at least substantially in abutment.

14. A method according to any one of the preceding claims 11-13, characterized in that the shaving is twisted, so that a diameter of the cross section of the helix increases before the core is slid into the helix.

15. A method of producing a coil for a responder according to any one of the preceding claims 1-9, characterized in that the method comprises the following steps:
- a round wire is wound round a core, so that the wound wire forms a coil wound round the coil; and
- at least two extreme turns of the coil formed are pressed towards each other, so that adjacent turns of the coil are pressed against each other and are flattened in order to obtain a wire of at least substantially rectangular section, wound round the core.

16. A method according to claim 15, characterized in that the round wire is wound round the core in the form of a helix.
